# FASCICULE DE BREVET EUROPEEN

(11) **EP 2 531 568 B1**
(45) Date de publication et mention de la délivrance du brevet: **27.03.2019**
(21) Numéro de dépôt: 11708054.9
(22) Date de dépôt: 01.02.2011
(51) Int. Cl.: C09D 177/00, C09D 5/03, C09D 171/02

(54) **POUDRE A BASE DE POLYAMIDE ET PROCEDE DE REVETEMENT D'OBJET PAR FUSION DE LADITE POUDRE**
POLYAMIDPULVER UND VERFAHREN ZUR BESCHICHTUNG EINES OBJEKTS DURCH SCHMELZEN DIESES PULVERS
POLYAMIDE POWDER AND METHOD FOR COATING AN OBJECT BY MELTING SAID POWDER

(30) Priorité: 01.02.2010 FR 1050660
(43) Date de publication de la demande: 12.12.2012
(73) Titulaire: Arkema France, 92700 Colombes (FR)
(72) Inventeur: HURAUX, Karine, 27520 Bourgtheroulde-Infreville (FR); DURAND, Jean-Charles, F-27000 Evreux (FR)
(86) Numéro de dépôt international: PCT/FR2011/050194
(87) Numéro de publication internationale: WO 2011/092444

(56) Documents cités:
- EP-A1- 0 412 888
- WO-A1-2009/033529
- WO-A2-03/082996
- WO-A2-2010/004227
- GB-A- 2 301 105
- US-A- 6 018 015

## Description

La présente invention concerne le domaine des compositions de poudre à base de polyamide utilisées dans les procédés de revêtement d'objets, notamment métalliques. Dans ces procédés, le film ou revêtement provient de la fusion d'une couche de poudre préalablement déposée sur l'objet. Ces procédés sont ci-après dénommés « procédés de revêtement par poudrage ».

Il existe à l'échelle industrielle plusieurs procédés de revêtement par poudrage. Un premier type de procédé est le poudrage électrostatique, il consiste à charger la poudre d'électricité statique et à la mettre en contact avec l'objet à recouvrir relié à un potentiel zéro. Par exemple la poudre est injectée dans un pistolet électrostatique qui va charger la dite poudre par effet Corona (aussi appelé effet couronne), par triboélectrification ou par combinaison des deux. La poudre ainsi chargée est projetée sur l'objet à recouvrir relié à un potentiel zéro. Selon une autre forme de poudrage électrostatique on trempe l'objet relié à un potentiel zéro dans un lit fluidisé de poudre chargée. A l'intérieur du lit fluidisé se trouve de la poudre dont on veut recouvrir l'objet. Cette poudre est sous la forme de particules solides de faible taille, c'est-à-dire de taille comprise entre 0.01 et 1 mm, de forme quelconque, qui sont en état de fluidisation à l'intérieur du lit en présence d'air ou de tout autre gaz. Dans le lit fluidisé il existe des électrodes pour charger la poudre par effet corona ou un dispositif pour la charger par effet triboélectrique. L'objet recouvert de poudre est ensuite placé à une température suffisante, par exemple dans un four, pour assurer un revêtement par fusion de la poudre provoquant la filmification. Par exemple, pour une poudre de polyamide 11 il suffit de chauffer à 220°C.

Un deuxième type de procédé consiste à préchauffer l'objet à recouvrir à une température supérieure à la température de fusion de la poudre. Une fois chaud, l'objet est immédiatement immergé dans un lit fluidisé de poudre, la poudre fond au contact de l'objet chaud et filmifie. Un recouvrement solide est ainsi assuré.

Parmi les défauts rencontrés dans les revêtements polymères obtenus par poudrage, on note le plus souvent les piqûres et les yeux de poisson. Une piqûre correspond à la formation de trous ou cratères à la surface d'un revêtement, provoqués par un défaut d'étalement du film polymère lorsqu'il filmifie et durcit. Les yeux de poisson se forment généralement lorsque le revêtement ne peut mouiller suffisamment la surface ou lorsque les particules de polymère coalescent mal entre elles ou encore en cas de mauvaise compatibilité de la matrice polyamide avec les pigments. Le revêtement fondu forme un motif qui ressemble à des yeux de poisson. En plus d'être inesthétiques, ces défauts peuvent entraîner des problèmes de corrosion. Il arrive également que certains revêtements et surfaces d'objets subissent une perte de teinte ou un jaunissement.

Les revêtements en polyamide possèdent une bonne résistance à l'abrasion, une bonne résistance à la corrosion et ils sont très faciles à mettre en oeuvre. Les brevets EP0367653, EP0706544, EP0821039, EP1453906, EP1541650 et la demande de brevet WO2008029070 déposées par la demanderesse décrivent ces propriétés avantageuses obtenues avec les revêtements polyamide.

La présente invention s'intéresse plus particulièrement aux revêtements hautes performances, qui combinant de nombreuses propriétés, qu'elles soient :
- fonctionnelles : résistance à la corrosion, à l'abrasion, résistance chimique, à l'hydrolyse, résistance thermique, aux UV, à la chaleur sèche, flexibilité du film de revêtement ; ou
- esthétiques : notamment d'aspect métallique, par exemple de couleur argentée, dorée ou irisée.

Les compositions de revêtement préparées par mélange à sec et contenant des pigments, en particulier des métalliques (aluminium) ou nacrés (par exemple mica/oxyde de titane) sont particulièrement sensibles à la formation des yeux de poisson ainsi qu'à l'envolée de pigments pendant la fluidisation. La présente invention a donc pour but de fournir une composition de poudre polyamide et un procédé de revêtement ne présentant pas ces inconvénients. En particulier, la présente invention a pour but de fournir une composition de poudre de revêtement améliorée :
- qui évite la formation d'yeux de poissons, cratères, et autres défauts de revêtement en surface du film, et
- qui est facile à mettre en oeuvre dans les procédés existants de revêtement par poudrage.

La demanderesse a montré qu'une utilisation particulière de polypropylène glycol dans une telle composition de poudre de revêtement polyamide permet de limiter l'envolée de pigments au cours du procédé de poudrage et surtout permet de remédier à aux défauts de surface (yeux de poisson) sur les revêtements obtenus.

La présente invention a donc pour objet une composition de revêtement sous forme de poudre libre comprenant en poids :
- de 50 à 99,99 %, de préférence de 80 à 99,99%, de préférence de 90 à 99,99%, ou mieux de 99,5 à 99,99%, de poudre de polyamide,
- de 0,01 à 0,5 % de polypropylène glycol, de préférence de 0,05 à 0,2%,
   de préférence de 0,05 à 0,1% de polypropylène glycol,
sur le poids total de la composition,
ladite composition étant obtenue par mélange à sec du polyamide et du polypropylène glycol.

La présente invention a notamment pour objet une composition de revêtement sous forme de poudre comprenant en poids :
- de 50 à 99,9 %, de préférence de 89,5 à 99,9%, de poudre de polyamide,
- de 0,1 à 10 % d'au moins un pigment,
- de 0,01 à 0,5 % de polypropylène glycol,
sur le poids total de la composition.

La présente invention a encore pour objet une composition de revêtement sous forme de poudre comprenant en poids :
- de 50 à 99,9%, de préférence de 94,5 à 99,9%, de poudre de polyamide,
- de 0,1 à 5 % d'au moins un pigment à effet optique,
- de 0,01 à 0,5 % de polypropylène glycol,
sur le poids total de la composition.

La composition selon l'invention sert notamment à recouvrir et/ou protéger toute sorte d'objets, notamment métalliques, tels que ceux en aluminium, en alliages d'aluminium, en acier et ses alliages, etc. L'invention est particulièrement utile pour les articles en fil métallique, par exemple les paniers métalliques de lave-vaisselle. La composition de l'invention, sous la forme d'un revêtement, peut également recouvrir des objets non métalliques, comme le bois, le plastique, la céramique ou encore des textiles.

### La poudre de polyamide :

Avantageusement, le polyamide (abrégé PA) est choisi parmi le PA 11, PA 12, PA 6.10, PA 6.12, PA 6.14, PA 6.18, PA 10.10, PA 10.12, les copolyamides, et leurs mélanges. Ces polyamides sont décrits notamment dans la demande FR2933706 page 11 ligne 9 à page 14 ligne 23. Les polyamides de viscosité inhérente comprise dans la gamme allant de 0,7 à 2, de préférence dans la gamme de 0,86 à 1,15 sont préférés (viscosité inhérente mesurée à une concentration en polyamide de 0,5% en poids en solution dans du métacrésol sur le poids total de la solution, à 20°C, au moyen d'un viscosimètre Ubbelohde). En particulier, les poudres de polyamide 11 Rilsan® forment des revêtements qui confèrent une protection de surface offrant une combinaison unique de propriétés : résistance chimique, résistance à la corrosion, résistance à l'abrasion, résistance aux chocs, résistance à la cavitation-érosion, faible coefficient de friction, fini de surface esthétique, agréable au toucher, compatibilité avec les produits alimentaires, propriétés hygiéniques et antibactériennes. Bien que, conformément à un mode de réalisation préféré de l'invention, la présente invention soit généralement décrite dans la suite du texte en référence à une poudre de PA 11 (qui a l'avantage supplémentaire d'être d'origine renouvelable), la présente invention ne se limite évidemment pas aux poudres de PA 11. La présente invention inclut toute poudre de PA (homopolyamide ou copolyamide) et dans laquelle les particules sont de granulométrie comprise entre 5 et 1000 µm, de préférence de l'ordre de 40 et 200 µm. A titre d'exemple de grades polyamides disponibles dans le commerce et particulièrement appropriés pour la présente invention, on peut citer notamment des produits de la marque Rilsan® à base de PA 11 de la Société Arkema.

### Le(s) pigment(s)

Avantageusement, la composition de l'invention comprend de 0,1 à 10% d'au moins un pigment. Un pigment est une matière colorante et/ou apportant un aspect «métallique» ou «irisé», se présentant sous forme d'une poudre (colorée, blanche ou noire), et insoluble, contrairement aux « colorants » proprement dits, dans les solvants et les substrats.
Selon un mode de réalisation de l'invention, les compositions de revêtement comprennent des pigments classiques monochromatiques, tels que ceux couramment utilisés dans les peintures et revêtements de l'art antérieur. Ces pigments sont responsables de la couleur et de l'opacité du revêtement. Ce sont des solides pulvérulents, de granulométrie très fine (généralement inférieure à 1 µm), minéraux ou organiques bien connus de l'homme du métier. A titre d'exemples, on peut citer le dioxyde de titane, l'oxyde de zinc, le noir de carbone, les oxydes de fer, les ferrocyanures ferriques de potassium, de sodium, le vert oxyde de chrome, les chromophores, les auxochromes, les azoïque, les phtalocyanines... Ces pigments très courants ne sont donc pas décrits davantage.
Selon un mode de réalisation préféré de l'invention, la composition comprend au moins un pigment à effet choisi parmi les pigments diffractants, les pigments interférentiels, tels que les nacres, les pigments réfléchissants et leurs mélanges. Ce sont ceux définis dans la demande FR2933706. Par pigment à effet, on entend tout matériau à effet optique spécifique. Cet effet est différent d'un simple effet de teinte conventionnel, c'est-à-dire unifié et stabilisé tel que produit par les matières colorantes classiques comme par exemple les pigments monochromatiques. Au sens de l'invention, «stabilisé» signifie dénué d'effet de variabilité de la couleur avec l'angle d'observation ou encore en réponse à un changement de température. Par exemple, le matériau à effet optique peut être choisi parmi les particules à reflet métallique, les agents de coloration goniochromatiques, les pigments diffractants, les agents thermochromes, les agents azurants optiques, ainsi que les fibres, notamment interférentielles. Bien entendu, ces différents matériaux peuvent être associés de manière à procurer la manifestation simultanée de deux effets, voire d'un nouvel effet conforme à l'invention.

Les pigments à effet pouvant entrer dans la composition de l'invention sont choisis de préférence parmi les pigments diffractants, les pigments interférentiels, les pigments réfléchissants et leurs mélanges. Ils peuvent être présents dans la composition de l'invention selon une teneur allant de 0,1 à 10% en poids, de préférence de 0,1 à 5% en poids, de préférence de 0,1 à 3% en poids, et mieux de 0,1 à 1% en poids par rapport au poids total de la composition.
L'expression « pigment interférentiel » désigne un pigment capable de produire une couleur par un phénomène d'interférences, par exemple entre la lumière réfléchie par une pluralité de couches superposées d'indices de réfraction différents, notamment une succession de couches de haut et de bas indices de réfraction. Un pigment interférentiel peut par exemple comporter plus de quatre couches d'indices de réfraction différents. Les couches du pigment interférentiel peuvent entourer ou non un noyau, lequel peut présenter une forme aplatie ou non. Les nacres sont des exemples de pigments interférentiels. Par « nacre », il faut comprendre des particules colorées de toute forme, irisées ou non, notamment produites par certains mollusques dans leur coquille ou bien synthétisées et qui présentent un effet de couleur par interférence optique. Comme exemples de nacres, on peut citer les pigments nacrés tels que le mica titane recouvert avec un oxyde de fer, le mica recouvert d'oxychlorure de bismuth, le mica titane recouvert avec de l'oxyde de chrome, le mica titane recouvert avec un colorant organique notamment du type précité ainsi que les pigments nacrés à base d'oxychlorure de bismuth. Il peut également s'agir de particules de mica à la surface desquelles sont superposées au moins deux couches successives d'oxydes métalliques et/ou de matières colorantes organiques. Parmi les nacres disponibles sur le marché, on peut citer les nacres commercialisées par la société BASF, par la société MERCK, par la société ECKART, et par la société ENGELHARD. Les nacres peuvent plus particulièrement posséder une couleur ou un reflet jaune, rose, rouge, bronze, orangé, brun, gris, argent, cuivré, métallisé et/ou moiré. A titre illustratif des nacres pouvant être introduites en tant que pigment interférentiel dans la composition de l'invention, on peut citer les nacres de couleur or notamment commercialisées par la société ENGELHARD sous le nom de Brillant gold 212G (Timica), Gold 222C (Cloisonne), Sparkle gold (Timica), Gold 4504 (Chromalite) et Monarch gold 233X (Cloisonne) ; les nacres bronzes notamment commercialisées par la société MERCK sous la dénomination Bronze fine (17384) (Colorona) et Bronze (17353) (Colorona) et par la société ENGELHARD sous la dénomination Super bronze (Cloisonne) ; les nacres oranges notamment commercialisées par la société ENGELHARD sous la dénomination Orange 363C (Cloisonne) et Orange MCR 101 (Cosmica) et par la société MERCK sous la dénomination Passion orange (Colorona) et Matte orange (17449) (Microna) ; les nacres de teinte brune notamment commercialisées par la société ENGELHARD sous la dénomination Nu-antique copper 340XB (Cloisonne) et Brown CL4509 (Chromalite) ; les nacres à reflet cuivre notamment commercialisées par la société ENGELHARD sous la dénomination Copper 340A (Timica) ; les nacres à reflet rouge notamment commercialisées par la société MERCK sous la dénomination Sienna fine (17386) (Colorona) ; les nacres à reflet jaune notamment commercialisées par la société ENGELHARD sous la dénomination Yellow (4502) (Chromalite) ; les nacres de teinte rouge à reflet or notamment commercialisées par la société ENGELHARD sous la dénomination Sunstone G012 (Gemtone) ; les nacres roses notamment commercialisées par la société ENGELHARD sous la dénomination Tan opale G005 (Gemtone) ; les nacres noires à reflet or notamment commercialisées par la société ENGELHARD sous la dénomination Nu antique bronze 240 AB (Timica), les nacres bleues notamment commercialisées par la société MERCK sous la dénomination Matte blue (17433) (Microna), les nacres blanches à reflet argenté notamment commercialisées par la société MERCK sous la dénomination Xirona Silver et les nacres orangées rosées vert doré notamment commercialisées par la société MERCK sous la dénomination Indian summer (Xirona) et leurs mélanges. On utilise de préférence une matière colorante choisie parmi les nacres, en particulier les micas recouverts d'au moins une couche d'oxyde métallique.
Bien entendu, l'utilisation d'autres pigments à effet, tels que des particules réfléchissantes interférentielles, des pigments goniochromatiques, des fibres goniochromatiques dispersées de longueur inférieure à 80 µm par exemple, des pigments diffractants, et/ou des particules réfléchissantes, tels que décrits dans la demande FR2933706 (page 15 ligne 24 à page 27 ligne 11) est également envisageable.

Avantageusement, la composition de l'invention comprend en outre de 0,1 à 0,3 % en poids d'au moins un pigment métallique. Le terme de «pigment métallique» recouvre des poudres à base d'aluminium, de magnésium, de cuivre, de fer (acier), de bronze, de titane ou des dérivés micacés, généralement utilisées comme additifs, en particulier des peintures et encres. Les paramètres physiques influant sur l'aspect « métallique » conféré par lesdits pigments sont les dimensions moyennes des particules constituant la poudre, leur forme, leur distribution et leur orientation dans la formulation finale. Ils présentent généralement une granulométrie comprise entre 5 et 25 µm et une forme dite en écailles plates ou paillettes ou encore en micro-lamelles et sont subdivisés en deux types, selon leur comportement au mouillage dans les solvants :
- Les pigments pelliculants (ou leafing) qui restent en surface de la formulation et s'orientent parallèlement aux interfaces en formant une couche métallique dense ce qui confère au milieu un pouvoir réflecteur très élevé et une excellente protection.
- Les pigments non-pelliculants qui s'orientent plus ou moins parallèlement au substrat, de manière aléatoire et dans le bas de couche de la préparation.

La composition selon l'invention peut comprendre des pigments métalliques, de préférence des pigments non pelliculants, de type aluminium préférentiellement, et à condition que leur teneur dans la composition ne dépasse pas 0,3% en poids sur le poids total de la composition.

A titre d'exemple de pigments métalliques pouvant être utilisés dans la composition de la présente invention, on peut citer ceux de la Société Eckart-Werke : Chromal® X (poudres d'aluminium pelliculant, traitées en surface par de l'acide stéarique et de diamètre moyen 9 µm), ou Chromal® XV (poudres d'aluminium pelliculant).

### Le polypropylène glycol (abrégé PPG):

La teneur en polypropylène glycol utilisée dans la composition de l'invention est comprise dans la gamme allant de 0,01 à 0,5% en poids, de préférence de 0,05 à 0,2%, de préférence de 0,05 à 0,1%, sur le poids total de la composition de poudre de revêtement. Une teneur supérieure à 0,5% n'est pas appropriée car elle peut diminuer l'écoulement ou la fluidisation de la poudre pendant le procédé de revêtement.

De préférence, la masse molaire du polypropylène glycol est comprise dans la gamme allant de 1000 à 3000 g/mol. Des masses molaires inférieures à 1000 g/mol nécessitent d'augmenter la teneur en polypropylène glycol pour éviter la formation des yeux de poisson à la surface du revêtement, ce qui peut rendre la composition de poudre plus difficile à mettre en oeuvre dans les procédés de revêtement par poudrage. Car au lieu de former une poudre de particules parfaitement libres, la composition peut comporter des agrégats ou des boues impossibles à fluidiser et/ou le revêtement obtenu n'est pas lisse. A l'inverse, si la masse molaire du polypropylène glycol est supérieure à 3000 g/mol, il se mélange difficilement avec la poudre polyamide, la composition obtenue est trop visqueuse pour obtenir une poudre libre, le mélange n'est pas suffisamment homogène et le film de revêtement peut faire apparaître une séparation de phase entre le PA et le PPG à certains endroits.

### Additifs :

Une composition selon l'invention peut comprendre en outre toutes sortes d'additifs et adjuvants usuellement utilisés dans le domaine des revêtements. Il peut s'agir d'additifs qui confèrent certaines propriétés spécifiques à la poudre et/ou au film de revêtement, telles que l'aptitude à la fluidité, la coulabilité, etc. A titre d'exemple, les additifs peuvent être choisis parmi les agents filmogènes, et le cas échéant les auxiliaires de filmification, les gommes, les polymères semi-cristallins, les agents antioxydants, les agents anticorrosion, les conservateurs, des agents protecteurs contre les UV, et leurs mélanges. On peut citer en outre des pigments pour l'absorption infra rouge, du noir de carbone, des charges minérales pour diminuer les contraintes internes et des additifs anti-feu. Ces charges sont par exemple des fibres de verre, des fibres de carbone, des nano-charges, des nano-argiles et des nano-tubes de carbone.

Il relève des opérations de routine de l'homme de l'art d'ajuster la nature et la quantité des additifs et/ou des charges présent(e)s dans les compositions conformes à l'invention, de telle sorte que les propriétés esthétiques et les propriétés de viscosité désirées de ces dernières n'en soient pas affectées.

### Procédé de fabrication de la composition de poudre :

La présente invention a également pour objet un procédé de fabrication de poudre de composition conforme à l'invention, et comprenant le mélange à sec (« dry blend ») du polyamide sous forme de poudre, du polypropylène glycol et du(des) pigment(s) éventuel(s), de préférence ajoutés dans cet ordre. Le PPG est ajouté de préférence en début de mélange, avant le(s) pigment(s). En effet, ajouté en fin de mélange, il peut provoquer une mauvaise fluidisation et donner une teinte inhomogène sur le revêtement final. Le mélange est avantageusement réalisé à température ambiante. Dans les exemples décrits ci-après, on utilise un mélangeur Henschel, dont la vitesse de rotation est ajustée par l'opérateur. Bien entendu, tout autre type de mélangeur pourrait être utilisé, tel que par exemple un mélangeur MAGIMIX, ou LOEDIGE.

Les poudres peuvent être éventuellement tamisées après le mélange. Le diamètre moyen (D50 dans la présente description) des particules de poudre de la composition selon l'invention est avantageusement compris entre 5 µm et 1 mm, de préférence compris dans la gamme allant de 40 à 200 µm. Le D50 est mesuré selon la norme ISO 9276 - parties 1 à 6 : « Représentation de données obtenues par analyse granulométrique ».

### Procédé de revêtement par poudrage :

De façon plus générale, la présente invention a pour objet l'utilisation de polypropylène glycol dans une composition pulvérulente à base de polyamide pour le revêtement par poudrage d'objets, notamment métalliques, dans laquelle le polypropylène glycol est ajouté au polyamide par mélange à sec. Le revêtement par poudrage comprend notamment le poudrage électrostatique et/ou le trempage en lit fluidisé et/ou le revêtement « minicoat » et/ou « maxicoat », notamment pour le revêtement à grande vitesse de pièces de toutes tailles. L'utilisation d'une composition conforme à l'invention dans un procédé de revêtement par poudrage d'un objet, notamment métallique, est particulièrement préférée. Le procédé de l'invention peut également recouvrir des objets non métalliques, comme le bois, le plastique ou la céramique.

La présente invention a encore pour objet un procédé de revêtement d'un objet par fusion d'une couche de poudre de composition conforme à l'invention.
Selon un premier mode de réalisation, le procédé de l'invention comprend les étapes suivantes :
- charger la poudre électriquement,
- approcher l'objet de la poudre ou mettre en contact l'objet et la poudre, l'objet étant relié à un potentiel zéro ou suffisant pour le recouvrir de poudre,
- soumettre l'objet recouvert de poudre à une température suffisante pour obtenir un revêtement par fusion de la poudre.
Selon un deuxième mode de réalisation, le procédé de l'invention comprenant les étapes suivantes :
- disposer la poudre dans un lit fluidisé
- chauffer l'objet à recouvrir à une température suffisante pour que la poudre fonde à son contact,
- tremper l'objet dans le lit fluidisé un temps suffisant pour qu'il se recouvre de poudre,
- retirer l'objet du lit fluidisé.
Selon un troisième mode de réalisation, le procédé comprend les étapes suivantes :
- chauffer l'objet à recouvrir à une température suffisante pour que la poudre fonde à son contact,
- projeter la poudre sur l'objet pour qu'il se recouvre de poudre.
Quel que soit le mode de revêtement par poudrage, l'objet est recouvert d'une mince couche de poudre. L'épaisseur de la mince couche de poudre peut aller jusqu'à 2 mm, elle est avantageusement comprise entre 0,1 et 0,6 mm. Après poudrage, l'objet est éventuellement soumis à un chauffage ou une cuisson (« post-fusion ») pour parfaire le lissage du revêtement. La poudre fond, filmifie et forme le revêtement.

La présente invention concerne également tout type d'objet comprenant un revêtement obtenu par poudrage d'une composition conforme à l'invention. Cet objet est avantageusement choisi parmi les objets suivants : un panier de lave-vaisselle, un rouleau d'imprimerie, un clip ou un ajusteur dans l'industrie textile, un clip, ressort, charnière pour l'industrie du bâtiment, un composant de mobilier extérieur ou intérieur, un composant de boîtier, connecteur, tube, gaine, câble, un composant d'équipement sportif, de chaussure, de chaussure de sport, de semelle de chaussure, de décoration, de bagage, de lunettes, d'équipement audio-visuel, informatique, électrique, électronique, d'équipement automobile ou aéronautique, un composant d'équipement médical et/ou agroalimentaire.
L'objet selon l'invention appartient avantageusement au domaine du bâtiment (clous, vis, attaches, pitons, gonds, crochets), de l'industrie électrique et électronique (serre câbles, attaches, ferrites), au domaine textile (brassières, boucles, boutons), au domaine automobile (arbres cannelés, rails de portes coulissantes, rails de sièges, ressorts, attaches, agrafes, pièces mobiles, boucles de ceinture de sécurité), à l'industrie des fluides (canalisations, raccords, pompes, et des valves).

### Exemples :

Les exemples ci-dessous illustrent la présente invention sans en limiter la portée. Dans les exemples, sauf indication contraire, tous les pourcentages et parties sont exprimés en poids.

Bien que les essais se réfèrent à une composition à base de polyamide 11, il est bien entendu que les compositions selon la présente invention ne se limitent pas à ce mode de réalisation, mais peuvent comprendre tout type de polyamide, seul ou en mélange.

Fabrication des compositions des essais 1 à 17.

On utilise une poudre de polyamide 11 Rilsan® (PA11) de viscosité inhérente comprise dans la gamme 1,05 à 1,15 (mesure à 0,5% en poids dans du métacrésol, à 20°C). La poudre de polyamide a un D50 sensiblement égal à 100 µm.

On utilise les pigments suivants :
- Pigments Noir, Jaune et Rouge (oxyde de fer) de marque Bayferrox® et de granulométrie respective : 0,6 µm, 0,2-0,8 µm, et 0,17 µm.
- Pigments interférentiels, de marque Iriodin® de Merck :
   ∘ Pour les essais 1 à 14 : pigment mica/TiO₂/SnO₂ de granulométrie allant de 1 à 15 µm,
   ∘ Pour les essais 15 et 16 : mica/TiO₂/SnO₂ de granulométrie allant de 20 à 100 µm.
- Pigment aluminium : 15 µm, de marque STANDART® PCS 1500 de ECKART.

Différentes sortes et teneurs de polyéther (PEG, PPG, PTMG ou copolymère PEG/PPG) sont testées dans la composition de référence (tableau 1 : colonne « Réf ») :
- dans les comparatifs 1 à 6 : du polyéthylène glycol (PEG) de masses molaires respectives (en g/mol) 600 (teneurs de 0,05 et 0,1%), 1500 (0,05 et 0,1%) et 8000 (0,05 et 0,1%) ;
- dans les essais 7 à 12: du polypropylène glycol (PPG) de masses molaires respectives (en g/mol) : 450 et 2000 (0,05 ; 0,1 et 0,2 %) ;
- dans le comparatif 13: le polytétraméthylène glycol (PTMG) de masse molaire (en g/mol) 2000 (teneur de 0,2%) ;
- dans le comparatif 14: le copolymère PEG/PPG (ratio 80/20) de masse molaire 8000 (teneur 0,1%).

Le polyéther est ajouté à la poudre polyamide par mélange à sec (« dry blend »). Puis les pigments sont ajoutés par mélange à sec au mélange ainsi obtenu. On utilise un mélangeur Henschel 10L. La poudre de PA est introduite dans le mélangeur et mise en agitation. On ajoute le polyéther, on mélange (60 secondes à 900tr/min). On ajoute ensuite tous les pigments et on mélange de nouveau (100 secondes à 900tr/min).

Chaque composition est mise en oeuvre dans un procédé de revêtement selon l'invention, par trempage en lit fluidisé.

Bien entendu le dispositif de trempage en lit fluidisé n'est donné qu'à titre d'exemple et tout autre dispositif de revêtement d'un objet par un film, tel que la pulvérisation ou le poudrage électrostatique, pourrait également être employé dans le procédé de l'invention.

Chaque composition de poudre de revêtement est appliquée par poudrage sur 5 plaques en acier de dimension 100x50x3 mm. Les conditions d'application comprennent :
- un chauffage des plaques pendant 10 min à 330°C, suivi
- de leur trempage pendant 4 secondes dans le lit fluidisé, puis de
- leur refroidissement à l'air.

Les compositions à haute teneur en pigments forment en général un nuage de pigment(s) au dessus du lit fluidisé et laissent un dépôt sur le rebord de la cuve après quelques secondes seulement de fluidisation, ce dépôt étant constitué essentiellement de pigments.

On remarque que la formule contenant du PPG ne forme pas de nuage de pigments au-dessus du lit fluidisé et donne seulement le dépôt de poudre de polyamide habituellement constaté lors de la fluidisation d'une poudre de polyamide sans pigment.

Des images de microscopie n'ont pas permis de mettre en évidence un phénomène de collage ni d'imprégnation des pigments sur les grains de poudre dans les compositions de l'invention.

Evaluation des yeux de poisson sur les revêtements obtenus :
On note dans le tableau 11a présence (« oui » ou « non ») d'yeux de poisson sur le revêtement obtenu sur chaque plaquette.

Parmi les produits testés, seuls :
- le PPG 2000 lorsqu'il est utilisé à des teneurs de 0,05%, 0,1% ou 0,2% dans la composition (Exemples 10 à 12), et
- le PPG 450 utilisé à 0,2% (Exemple 9)
   permettent de supprimer totalement les yeux de poisson.

On ne constate pas d'amélioration de ce défaut qui reste présent sur les revêtements obtenus par poudrage des compositions comprenant du PEG, PTMG ou copolymère PEG/PPG (Comparatifs 1 à 6 et 13 à 14). Au contraire, on observe même des défauts supplémentaires (cratères) avec les polyéthers de masse molaire 8000 g/mol (PEG et copolymère PEG/PPG) et avec le PTMG. On note également une séparation de phase entre le polyamide et le PEG sur les films obtenus avec les comparatifs 5 et 6.

**Tableau 1 : Essais 1 à 14**

| | | **Essai 1** | **Essai 2** | **Essai 3** | **Essai 4** | **Essai 5** | **Essai 6** | **Essai 7** | **Essai 8** | **Essai 9** | **Essai 10** | **Essai 11** | **Essai 12** | **Essai 13** | **Essai 14** |
|---|---|---|---|---|---|---|---|---|---|---|---|---|---|---|---|
| | **Réf** | **Comp 1** | **Comp 2** | **Comp 3** | **Comp 4** | **Comp 5** | **Comp 6** | **Ex 7** | **Ex 8** | **Ex 9** | **Ex 10** | **Ex 11** | **Ex 12** | **Comp 13** | **Comp 14** |
| Polyamide 11 Rilsan | 98,76 | 98,71 | 98,66 | 98,71 | 98,66 | 98,71 | 98,66 | 98,71 | 98,66 | 98,56 | 98,71 | 98,66 | 98,56 | 98,56 | 98,66 |
| Pigment interférenciel | 1 | 1 | 1 | 1 | 1 | 1 | 1 | 1 | 1 | 1 | 1 | 1 | 1 | 1 | 1 |
| Pigment Jaune | 0,05 | 0,05 | 0,05 | 0,05 | 0,05 | 0,05 | 0,05 | 0,05 | 0,05 | 0,05 | 0,05 | 0,05 | 0,05 | 0,05 | 0,05 |
| Pigment Noir | 0,07 | 0,07 | 0,07 | 0,07 | 0,07 | 0,07 | 0,07 | 0,07 | 0,07 | 0,07 | 0,07 | 0,07 | 0,07 | 0,07 | 0,07 |
| Pigment Rouge | 0,02 | 0,02 | 0,02 | 0,02 | 0,02 | 0,02 | 0,02 | 0,02 | 0,02 | 0,02 | 0,02 | 0,02 | 0,02 | 0,02 | 0,02 |
| PEG 600 | | 0,05 | 0,1 | | | | | | | | | | | | |
| PEG 1500 | | | | 0,05 | 0,1 | | | | | | | | | | |
| PEG 8000 | | | | | | 0,05 | 0,1 | | | | | | | | |
| PPG 450 | | | | | | | | 0,05 | 0,1 | 0,2 | | | | | |
| PPG 2000 | | | | | | | | | | | 0,05 | 0,1 | 0,2 | | |
| PTMG 2000 | | | | | | | | | | | | | | 0,2 | |
| Copolymère PEG/PPG (80/20) 8000 | | | | | | | | | | | | | | | 0,1 |
| Présence d'yeux de poisson | oui | oui | oui | oui | oui | Oui + séparation de phase PA/PEG | Oui + séparation de phase PA/PEG | rare | rare | non | non | non | non | oui+ autres défauts de revêtement | oui+ autres défauts de revêtement |

Des essais sur d'autres formules détaillées dans le tableau 2 ci-dessous montrent que des teneurs en PPG de 0,05% ou 0,075% peuvent suffire à supprimer les yeux de poisson.

**Tableau 2 : Exemples 15 à 17**

| | **Ex 15** | **Ex 16** | **Ex 17** |
|---|---|---|---|
| Poudre PA 11 | 98,85 | 98,025 | |
| Poudre PA 11 colorée bleue | | | 99,4 |
| PPG 2000 | 0,05 | 0,075 | 0,1 |
| Pigments interférentiels | 1 | 1,6 | |
| Pigment Noir Oxyde de fer | 0,1 | 0,2 | |
| Pigment Rouge Oxyde de fer | | | 0,5 |
| Pigment Aluminium | | 0,1 | |
| Envolée/dépôts de pigments | non | non | non |
| Présence d'yeux de poisson | non | non | non |

La présence de PPG dans la composition de poudre polyamide selon l'invention n'altère pas les autres performances des revêtements en polyamide (résistance à l'abrasion, résistance à la corrosion, etc.). En outre, des essais de pollution croisée ont montré que des traces de grades de poudre PA additivée PPG (compositions selon l'invention) ne polluaient pas les grades de poudres PA qui ne comprennent pas d'anti-cratère.

La mise en oeuvre d'une composition de poudre selon l'invention (exemples 9 à 12 et 15 à 17) dans un procédé de revêtement par poudrage permet d'obtenir des pièces recouvertes d'un film homogène, sans défauts, ni yeux de poisson.

## Revendications

1. Composition de revêtement sous forme de poudre libre comprenant en poids :
- de 50 à 99,99 % de poudre de polyamide,
- de 0,01 à 0,5 % de polypropylène glycol,
sur le poids total de la composition,
ladite composition étant obtenue par mélange à sec du polyamide et du polypropylène glycol.

2. Composition de revêtement sous forme de poudre comprenant en poids :
- de 50 à 99,9 % de poudre de polyamide,
- de 0,1 à 10 % d'au moins un pigment,
- de 0,01 à 0,5 % de polypropylène glycol,
sur le poids total de la composition.

3. Composition de revêtement sous forme de poudre comprenant en poids :
- de 50 à 99,9 % de poudre de polyamide,
- de 0,1 à 5 % d'au moins un pigment à effet optique,
- de 0,01 à 0,5 % de polypropylène glycol,
sur le poids total de la composition.

4. Composition selon l'une quelconque des revendications 1 à 3, dans laquelle le polyamide est choisi parmi le PA 11, PA 12, PA 6.10, PA 6.12, PA 6.14, PA 6.18, PA 10.10, PA 10.12, les copolyamides, et leurs mélanges.

5. Composition selon la revendication 3 ou 4, dans laquelle ledit au moins un pigment à effet est choisi parmi les pigments diffractants, les pigments interférentiels, les pigments réfléchissants et leurs mélanges.

6. Composition selon l'une quelconque des revendications 1 à 5, dans laquelle la masse molaire du polypropylène glycol est comprise dans la gamme allant de 1000 à 3000 g/mol.

7. Composition selon l'une quelconque des revendications 1 à 6, comprenant en outre de 0,1 à 0,3 % en poids d'au moins un pigment métallique.

8. Procédé de fabrication de poudre de composition conforme à l'une quelconque des revendications 1 à 7, comprenant le mélange à sec du polyamide, du polypropylène glycol, et du pigment éventuel.

9. Procédé selon la revendication 8, dans lequel le polyamide, le polypropylène glycol puis le pigment éventuel sont ajoutés dans cet ordre lors du mélange à sec.

10. Utilisation de polypropylène glycol dans une composition pulvérulente à base de polyamide pour le revêtement par poudrage d'objets, notamment métalliques, dans laquelle le polypropylène glycol est ajouté au polyamide par mélange à sec.

11. Utilisation selon la revendication 10, dans laquelle le revêtement par poudrage d'un objet comprend le poudrage électrostatique et/ou le trempage en lit fluidisé de l'objet.

12. Utilisation d'une composition selon l'une quelconque des revendications 1 à 7 dans un procédé de revêtement d'objet métallique par poudrage.

13. Procédé de revêtement d'un objet par fusion d'une couche de poudre de composition conforme à l'une quelconque des revendications 1 à 7, comprenant les étapes suivantes :
- charger la poudre électriquement,
- approcher l'objet de la poudre ou mettre en contact l'objet et la poudre, l'objet étant relié à un potentiel zéro ou suffisant pour le recouvrir de poudre,
- soumettre l'objet recouvert de poudre à une température suffisante pour obtenir un revêtement par fusion de la poudre.

14. Procédé de revêtement d'un objet par fusion d'une couche de poudre de composition conforme à l'une quelconque des revendications 1 à 7, comprenant les étapes suivantes :
- disposer la poudre dans un lit fluidisé
- chauffer l'objet à recouvrir à une température suffisante pour que la poudre fonde à son contact,
- tremper l'objet dans le lit fluidisé un temps suffisant pour qu'il se recouvre de poudre,
- retirer l'objet du lit fluidisé.

15. Procédé de revêtement d'un objet par fusion d'une couche de poudre de composition conforme à l'une quelconque des revendications 1 à 7, comprenant les étapes suivantes :
- chauffer l'objet à recouvrir à une température suffisante pour que la poudre fonde à son contact,
- projeter la poudre sur l'objet pour qu'il se recouvre de poudre.

16. Objet comprenant un revêtement obtenu par poudrage d'une composition conforme à l'une quelconque des revendications 1 à 7.

17. Objet selon la revendication 16, ledit objet étant un panier de lave-vaisselle, un rouleau d'imprimerie, un clip ou un ajusteur dans l'industrie textile, un clip, ressort, charnière, un composant de mobilier extérieur ou intérieur, un composant de boîtier, connecteur, tube, gaine, câble, un composant d'équipement sportif, de chaussure, de chaussure de sport, de semelle de chaussure, de décoration, de bagage, de lunettes, d'équipement audio-visuel, informatique, électrique, électronique, d'équipement automobile ou aéronautique, un composant d'équipement médical et/ou agroalimentaire.

18. Utilisation de polypropylène glycol en quantité efficace par mélange à sec dans une composition de revêtement sous forme de poudre de polyamide, pour éviter la formation des yeux de poisson à la surface du revêtement.

## Patentansprüche

1. Beschichtungszusammensetzung in Form von losem Pulver, die in Gewichtsprozent:
- 50 bis 99,99 % Polyamidpulver,
- 0,01 bis 0,5 % Polypropylenglykol,
des Gesamtgewichts der Zusammensetzung umfasst,
wobei die Zusammensetzung durch Mischen in trockenem Zustand des Polyamids und des Polypropylenglykols erhalten wird.

2. Beschichtungszusammensetzung in Form von losem Pulver, die in Gewichtsprozent:
- 50 bis 99,9 % Polyamidpulver,
- 0,1 bis 10 % mindestens eines Pigments,
- 0,01 bis 0,5 % Polypropylenglykol des Gesamtgewichts der Zusammensetzung umfasst.

3. Beschichtungszusammensetzung in Form von losem Pulver, die in Gewichtsprozent:
- von 50 bis 99,9 % Polyamidpulver,
- von 0,1 bis 5 % mindestens eines Pigments mit optischem Effekt,
- von 0,01 bis 0,5 % Polypropylenglykol des Gesamtgewichts der Zusammensetzung umfasst.

4. Zusammensetzung nach einem der Ansprüche 1 bis 3, wobei das Polyamid aus dem PA 11, PA 12, PA 6.10, PA 6.12, PA 6.14, PA 6.18, PA 10.10, PA 10.12, den Copolyamiden und ihren Gemischen ausgewählt ist.

5. Zusammensetzung nach Anspruch 3 oder 4, wobei das mindestens eine Pigment mit Effekt aus den beugenden Pigmenten, den Interferenzpigmenten, den reflektierenden Pigmenten und ihren Gemischen ausgewählt ist.

6. Zusammensetzung nach einem der Ansprüche 1 bis 5, wobei die molare Masse des Polypropylenglykols in dem Bereich liegt, der von 1000 bis 3000 g/mol reicht.

7. Zusammensetzung nach einem der Ansprüche 1 bis 6, die außerdem 0,1 bis 0,3 Gew.-% mindestens eines metallischen Pigments umfasst.

8. Fertigungsverfahren von Pulver mit einer Zusammensetzung nach einem der Ansprüche 1 bis 7, das das Mischen im trockenen Zustand des Polyamids, des Polypropylenglykols und des eventuellen Pigments umfasst.

9. Verfahren nach Anspruch 8, wobei das Polyamid, das Polypropylenglykol und dann das eventuelle Pigment in dieser Reihenfolge beim Mischen im trockenen Zustand hinzugefügt werden.

10. Gebrauch von Polypropylenglykol in einer pulverförmigen Zusammensetzung auf Polyamidbasis für die Beschichtung von Objekten, insbesondere metallischer, durch Pulverbeschichtung, wobei das Polypropylenglykol zu dem Polyamid durch Mischen im trockenen Zustand hinzugefügt wird.

11. Gebrauch nach Anspruch 10, wobei die Beschichtung durch Pulverbeschichtung eines Objekts das elektrostatische Pulverbeschichten und/oder das Eintauchen des Objekts in ein Wirbelbett umfasst.

12. Gebrauch einer Zusammensetzung nach einem der Ansprüche 1 bis 7 bei einem Beschichtungsverfahren eines metallischen Objekts durch Pulverbeschichten.

13. Beschichtungsverfahren eines Objekts durch Schmelzen einer Pulverschicht mit einer Zusammensetzung nach einem der Ansprüche 1 bis 7, das die folgenden Schritte umfasst:
- elektrisches Laden des Pulvers,
- Annähern des Objekts mit dem Pulver oder Inberührungbringen des Objekts und des Pulvers, wobei das Objekt mit einem Nullpotenzial oder für das Bedecken mit Pulver ausreichenden Potenzial verbunden ist,
- Unterziehen des Objekts, das mit Pulver bedeckt ist, einer Temperatur, die ausreicht, um eine Beschichtung durch Schmelzen des Pulvers zu erhalten.

14. Beschichtungsverfahren eines Objekts durch Schmelzen einer Pulverschicht mit einer Zusammensetzung nach einem der Ansprüche 1 bis 7, das die folgenden Schritte umfasst:
- Anordnen des Pulvers in einem Wirbelbett,
- Erhitzen des zu bedeckenden Objekts auf eine Temperatur, die ausreicht, damit das Pulver bei seiner Berührung schmilzt,
- Eintauchen des Objekts in das Wirbelbett während einer Zeit, die ausreicht, damit es sich mit Pulver bedeckt,
- Herausnehmen des Objekts aus dem Wirbelbett.

15. Beschichtungsverfahren eines Objekts durch Schmelzen einer Pulverschicht mit einer Zusammensetzung nach einem der Ansprüche 1 bis 7, das die folgenden Schritte umfasst:
- Erhitzen des zu bedeckenden Objekts auf eine Temperatur, die ausreicht, damit das Pulver bei seiner Berührung schmilzt,
- Spritzen des Pulvers auf das Objekt, damit es sich mit Pulver bedeckt.

16. Objekt, das eine Beschichtung umfasst, die durch Pulverbeschichten mit einer Zusammensetzung nach einem der Ansprüche 1 bis 7 erhalten wird.

17. Objekt nach Anspruch 16, wobei das Objekt ein Geschirrspülerkorb, eine Druckereiwalze, ein Clip oder ein Justierer in der Textilindustrie, ein Clip, eine Feder, ein Scharnier, ein Bauteil eines Möbels für draußen oder drinnen, ein Gehäusebauteil, ein Steckverbinder, eine Röhre, eine Hülle, ein Kabel, ein Bauteil einer Sportausrüstung, eines Schuhs, eines Sportschuhs, einer Schuhsohle, einer Dekoration, eines Gepäcks, einer Brille, audiovisueller, Computertechnik-, elektrischer, elektronischer Ausstattung, Automobil- oder Luftfahrtausstattung, ein Bauteil medizinischer und/oder Lebensmittelindustrieausstattung ist.

18. Gebrauch von Polypropylenglykol in effizienter Menge durch Mischen im trockenen Zustand in einer Beschichtungszusammensetzung in Form von Polyamidpulver, um das Bilden von Orangenhaut auf der Oberfläche der Beschichtung zu verhindern.

## Claims

1. Coating composition in loose powder form comprising, by weight:
- from 50% to 99.99% of polyamide powder,
- from 0.01% to 0.5% of polypropylene glycol, relative to the total weight of the composition, said composition being obtained by dry blending the polyamide and the polypropylene glycol.

2. Coating composition in powder form comprising, by weight:
- from 50% to 99.9% of polyamide powder,
- from 0.1% to 10% of at least one pigment,
- from 0.01% to 0.5% of polypropylene glycol, relative to the total weight of the composition.

3. Coating composition in powder form comprising, by weight:
- from 50% to 99.9% of polyamide powder,
- from 0.1% to 5% of at least one optical-effect pigment,
- from 0.01% to 0.5% of polypropylene glycol, relative to the total weight of the composition.

4. Composition according to any one of Claims 1 to 3, in which the polyamide is chosen from PA 11, PA 12, PA 6.10, PA 6.12, PA 6.14, PA 6.18, PA 10.10, and PA 10.12, and copolyamides, and mixtures thereof.

5. Composition according to Claim 3 or 4, in which said at least one effect pigment is chosen from diffractive pigments, interference pigments and reflective pigments, and mixtures thereof.

6. Composition according to any one of Claims 1 to 5, in which the molar mass of the polypropylene glycol is within the range from 1000 to 3000 g/mol.

7. Composition according to any one of Claims 1 to 6, also comprising from 0.1% to 0.3% by weight of at least one metallic pigment.

8. Process for manufacturing a powder composition in accordance with any one of Claims 1 to 7, comprising the dry blending of polyamide, polypropylene glycol and optional pigment.

9. Process according to Claim 8, in which the polyamide, the polypropylene glycol and then the optional pigment are added in this order during the dry blending.

10. Use of polypropylene glycol in a polyamide-based pulverulent composition for the powder coating of objects, especially metal objects, in which the polypropylene glycol is added to the polyamide by dry blending.

11. Use according to Claim 10, in which the powder coating of an object comprises the electrostatic powdering and/or the dipping in a fluidized bed of the object.

12. Use of a composition according to any one of Claims 1 to 7 in a process for coating a metal object by powdering.

13. Process for coating an object by melting a layer of powder composition in accordance with any one of Claims 1 to 7, comprising the following steps:
- electrically charging the powder,
- approaching the object to the powder or placing the object and the powder in contact, the object being connected to a zero potential or a potential sufficient to cover it with powder,
- subjecting the powder-covered object to a sufficient temperature to obtain a coating by melting of the powder.

14. Process for coating an object by melting of a layer of powder composition in accordance with any one of Claims 1 to 7, comprising the following steps:
- placing the powder in a fluidized bed,
- heating the object to be covered to a sufficient temperature for the powder to melt on contact therewith,
- dipping the object in the fluidized bed for a sufficient time for it to become covered with powder,
- removing the object from the fluidized bed.

15. Process for coating an object by melting a layer of powder composition in accordance with any one of Claims 1 to 7, comprising the following steps:
- heating the object to be covered to a sufficient temperature for the powder to melt on contact therewith,
- spraying the powder onto the object in order for it to become covered with powder.

16. Object comprising a coating obtained by powdering with a composition in accordance with any one of Claims 1 to 7.

17. Object according to Claim 16, said object being a dishwasher basket, a printer roller, a clip or an adjuster in the textile industry, a clip, spring or hinge, an exterior or interior furniture component, a case component, connector, tube, sheath or cable, a sports equipment, shoe, sports shoe, shoe sole, decorative, baggage or spectacle component, a component of audio-visual equipment, an information technology, electrical or electronic component, a component of motor vehicle or aeronautical equipment, or a component of medical and/or agrifood equipment.

18. Use of polypropylene glycol in an effective amount by dry blending in a coating composition in the form of a polyamide powder, to avoid the formation of fisheyes at the surface of the coating.
